# EUROPEAN PATENT APPLICATION

(11) **EP 1 681 588 A2**
(43) Date of publication of application: **19.07.2006**
(21) Application number: 06001058.4
(22) Date of filing: 18.01.2006
(51) Int. Cl.: G02B 6/38, G02B 6/25, B08B 11/00

(54) **Cleaner for an optical fiber connector**

(30) Priority: 18.01.2005 JP 2005010808
(71) Applicant: SEIKOH GIKEN Co., Ltd., Matsudo-shi, Chiba (JP)
(72) Inventor: Kida, Takahisa, Matsudo-shi Chiba (JP)
(74) Representative: Grünecker, Kinkeldey, Stockmair & Schwanhäusser Anwaltssozietät

(57) **Abstract**

A cleaner for an optical fiber connector which is made up of an elongated inner guide member having a base and an end tip, around which a cleaning member extends along the extension axis thereof, from the base to the end tip and returning again to the base; a sliding member supported so as to be slidable along the inner guide member and having a pair of guide parts that guide the cleaning member, which can slide between a projected position protruding beyond the end tip of the inner guide member and a retracted position retreating beyond the end tip, such that when the sliding member is in the projected position, the cleaning member is positioned extending around the sliding member instead of around the end tip of the inner guide member; and a tubular shaped external guide member that supports the sliding member and encloses the inner guide member and the cleaning member.

## Description

### CROSS-REFERENCE TO RELATED APPLICATIONS

This application claims benefit of priority to Japanese Patent Application No. 2005-10808, filed on January 18, 2005, the entire contents of which are incorporated by reference herein.

### BACKGROUND OF THE INVENTION

### 1. Field of the Invention

The present invention relates to a cleaner for an optical fiber connector used for cleaning a ferrule end face (connecting end face) of an optical fiber connector incorporated in optical communications equipment and the like.

### 2. Description of Related Art

An optical fiber connector incorporated in equipment such as optical communications equipment and the like is connected and disconnected frequently. When such an optical fiber connector is disconnected dust or grease or the like may become attached to the end face of the ferrule of the optical fiber connector causing a deterioration in transmission performance. For this reason, the ferrule end face is cleaned when connecting or disconnecting the optical fiber connector.

A connector to be inserted (a male connector) can be cleaned with relative ease as the end face thereof is exposed, however a connector receiving the male connector (a female connector) incorporated in communications equipment is difficult to clean as the interface requiring cleaning is positioned embedded in a housing.

For this reason, various cleaners for cleaning the connector end face in a concealed position have been proposed. For example, the cleaner disclosed in Japanese Unexamined Patent Application Publication No. 2004-151402 has cleaning tape wrapped around the end (cleaning part) of a head member, and this cleaning tape is drawn out as the cleaner is used so that the cleaning tape surface in contact with the ferrule end face being cleaned is constantly renewed.

With this kind of cleaner unnecessary force is exerted on the cleaning tape when the head member is inserted inside the connector housing, for example, as the cleaning tape catches on the housing inner wall and the like. As this cleaning tape is simply wrapped around the tip of the head member it sometimes becomes dislocated.

When the cleaning tape becomes dislocated it must be wound around the end of the head member once again. This recovery operation requires wrapping the dislocated cleaning tape around the end of the head member while the tape is being pulled up by a tool such as a pin set or the like. Accordingly, such cleaners have undesirable problems in terms of operating efficiency and maintenance of the tool. For example, the arrangement of the tool is required in preparation for the cleaning tape dislocated during a cleaning operation, and it takes a long time to perform the recovery operation using the tool.

### SUMMARY OF THE INVENTION

With the foregoing in view, it is an object of the present invention to provide a cleaner for an optical fiber connector that can swiftly restore dislocated cleaning tape without using a tool.

In order to achieve the above object, according to a first aspect of the present invention a cleaner for an optical fiber connector is provided comprising:
a elongated inner guide member (9) having a base and an end tip, around which a cleaning member (3) extending in conformance with the axis of extension thereof, from the base to the end tip and returning again to the base;
a sliding member (11) supported so as to be capable of sliding along the inner guide member and having a pair of guide parts (23, 24) that guide the cleaning member, which can slide between a projected position protruding beyond the end tip of the inner guide member and a retracted position retreating beyond the end tip, such that when the sliding member is in the projected position, the cleaning member is positioned extending around the sliding member instead of around the end tip of the inner guide member; and
a tubular shaped external guide member that supports the sliding member and encloses the inner guide member and the cleaning member.

According to a further aspect of the present invention, a cleaner for an optical fiber connector is provided comprising:
an inner guide member having an end tip that is a cleaning region;
a cleaning member that extends around the end tip of the inner guide member;
a sliding member slidably supported so as to move from a projected position protruding from the end tip of the inner guide member to a retracted position retreating from the end tip, such that when the sliding member is in the projected position, the cleaning member extends around the sliding member instead of around the end tip of the inner guide member; and
an external guide member that supports the sliding member such that the sliding member is slidable between the projected position and the retracted position and which is constantly biased by a biasing means such that the sliding member is disposed in the projected position,
wherein the sliding member provides a guide slot having a U shape cross-section, and the guide slot restricts the movement in the leftward and rightward directions of the cleaning member engaged on the guide slot.

### BRIEF DESCRIPTION OF THE ACCOMPANYING DRAWINGS

These and other objects, features and advantages will become clearer from the following description of exemplary embodiments of the invention, read in connection with the accompanying drawings in which:
FIG. 1 is a side view of a cleaner for an optical fiber connector according to the present invention;
FIG. 2 is a cross-sectional view of the cleaning part of the cleaner;
FIG. 3 is a perspective view of the sliding member in the projected position;
FIG. 4 is a perspective view of the sliding member in the retracted position;
FIG. 5 depicts the same view as FIG. 4, but showing the condition with the cleaning tape detached;
FIG. 6 is a side view of the cleaning part when the tip part of the inner guide member is in the protruding condition;
FIG. 7 is a side view of the cleaner when one side of the housing is removed;
FIG. 8 is a cross-sectional view of the cleaning part of the cleaner and the front end of the housing;
FIG. 9A and 9B are explanatory drawings depicting the operations of the take up reel;
FIG. 10 is an exploded view of the take up reel; and
FIG. 11 is a cross-sectional view of the take up reel.

### DETAILED DESCRIPTION OF THE INVENTION

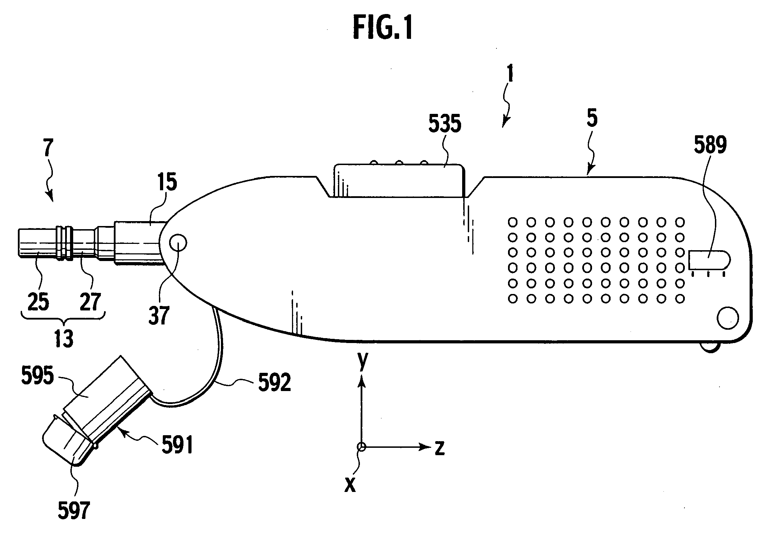

An embodiment of the present invention will now be described with reference to FIGS. 1 to 11. In these drawings, like reference numerals identify like elements.

Referring to FIG. 1, the optical fiber connector cleaner 1 of the present invention, (hereafter "the cleaner") comprises a housing 5, and a cleaning part 7 disposed at the tip end of the housing 5.

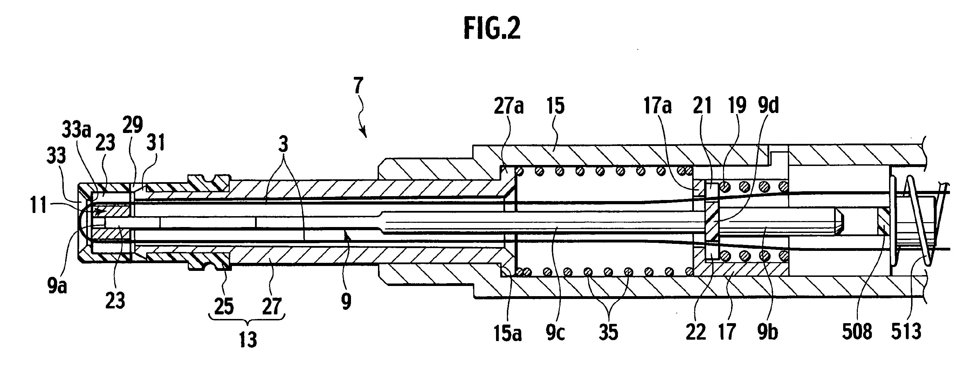

Referring to FIG. 2, the cleaning part 7 comprises an inner guide member 9 around which a cleaning tape 3 extends along the longitudinal direction thereof, a sliding member 11 slidably supported on the inner guide member 9, a tube shaped external guide member 13 that supports the sliding member 11 and encompasses the inner guide member 9 and the cleaning tape 3, and a tube shaped guide frame 15 that supports the external guide member 13.

The inner guide member 9 comprises a base part 9b and an extending part 9c that extends from the base part 9b toward the front (the left in FIG. 1).

This extending part 9c is a plate shaped form, narrow in the widthwise direction. Thus, even where a number of optical fiber connectors are installed in high density in equipment, the cleaning tape 3 on the tip end 9a of the extending part 9c can be brought definitively into contact with the ferrule end face to be cleaned.

The base part 9b of the inner guide member 9 is supported by a supporting bracket 17 incorporated in the guide frame 15. A forceful action driven by a first biasing means 19 such as a coil spring or the like, operates on a flange 9d provided on the base part 9b, such that the inner guide member 9 is constantly biased forward. Further, the flange 9d is in contact with an inner stepped part 17a of the supporting bracket 17 such that the movement in the forward direction of the inner guide member 9 is inhibited. Thus, a constant cleaning pressure is constantly maintained at the tip end 9a of the inner guide member 9 or the cleaning region. A pair of concave grooves 21 and 22 disposed in the flange 9d function as a guide member guiding the cleaning tape 3.

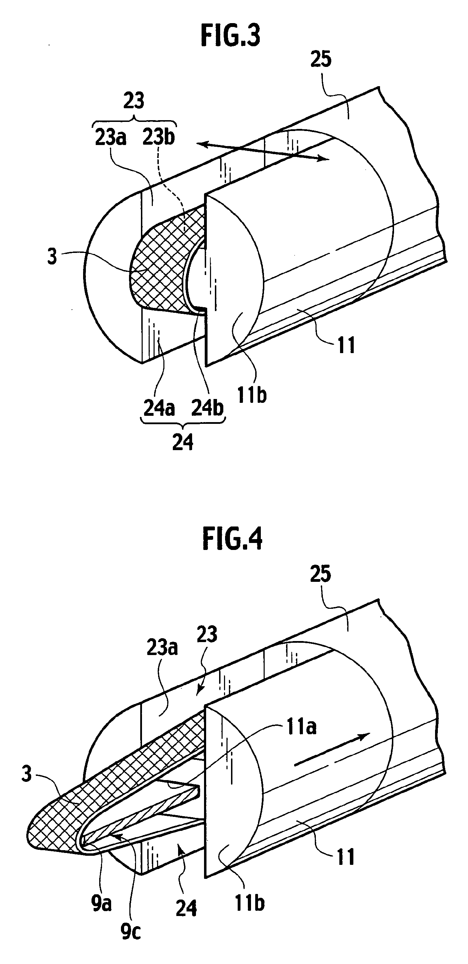

Referring to FIG. 3 and FIG. 4, the sliding member 11 has a substantially circular cylinder shaped form. A bore 11a (FIG. 4) is formed following an axis extending along this circular cylinder shape, while an extending part 9c of the inner guide member 9 is inserted into and engages this bore 11 a. The sliding member 11 can slide along the extending part 9c, between a projected position (FIG. 3) protruding beyond the tip end 9a of the extending part 9c and a retracted position (FIG. 4) retreating than the tip end 9a.

A pair of guide grooves 23 and 24 are formed on the upper and under sides respectively of sliding member 11, extending along the bore 11a. The guide grooves 23 and 24 have a U-shaped form cross-sectionally comprising lower surfaces 23b and 24b that are somewhat wider than the width of the cleaning tape 3 and left and right vertical restricting surfaces 23a and 24a that restrict the movement in the widthwise direction (the direction of the arrow in FIG. 3) of the cleaning tape 3 engaged in the guide grooves 23 and 24.

In the original state shown in FIG. 2, or the cleaning standby condition, the sliding member 11 is in the projected position. At this time, the cleaning tape 3 is engaged so as to be capable of moving to pass from the concave groove 22 at the lower side of the base part 9b, along the lower surface of the extending part 9c, the guide groove 24 at the lower side of the sliding member 11, the front face 11b and the guide groove 23 on the upper side, and the upper surface of the extending part 9c, moving toward the guide groove 21 at the upper side of the base part 9b.

When the sliding member 11 moves to the retracted position shown in FIG. 4, the extending part 9c is relatively advanced in relation to the sliding part 11, thus the cleaning tape 3 extends from the groove 24 at the lower side of the sliding member 11, passing the tip end 9a of the extending part 9c and then to the groove 23 at the upper side of the sliding member 11.

That is to say, the cleaning tape 3 extends around the front face 11b of the sliding member 11 instead of the tip end 9a of the extending part 9c when the sliding part 11 is in the projected position (FIG. 3), and extends around the tip end 9a of the extending part 9c instead of the front face 11b of the sliding member 11 when the sliding member 11 is in the retracted position (FIG. 4).

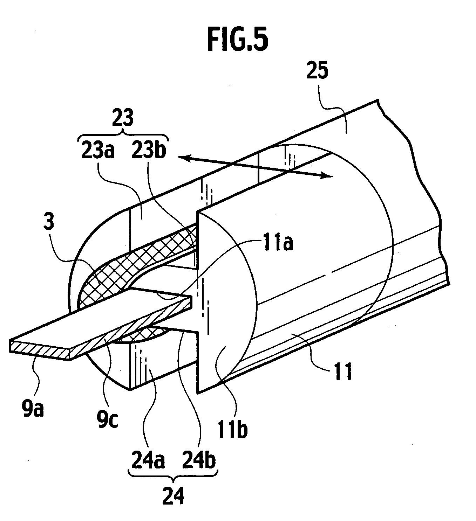

When the sliding member 11 is in the retracted position, the cleaning tape 3 can be detached from the tip end 9a of the extending part 9c as shown in FIG. 5. As the cleaning tape 3 is now passing through the guide members 23 and 24 of the sliding member 11 as before, it is certain to extend around the front face 11 b of the sliding member 11.

Accordingly, even if the cleaning tape 3 is separated from the tip end 9a of the extending part 9c, by moving the sliding member 11 into the projected position and bringing the tip end 9a of the extending part 9c back into concealment in the bore 11a of the sliding member 11, the condition of readiness for cleaning as shown in FIG. 2 and FIG. 3 can be swiftly and easily achieved.

Referring to FIG. 2, the external guide member 13 comprises a tube shaped first guide part 25 and a tube shaped second guide part 27 positioned at the rear of the first guide part. The external guide member 13 covers the inner guide member 9, the sliding member 11 and the cleaning tape 3 positioned inside and functions as a protective means protecting these against soiling from the outside.

The rear end of the first guide part 25 of the external guide member 13 (the right side in FIG. 2) and the front end of the second guide part 27 of the external guide member 13 (the left side in FIG. 2) are fitted together. These fitted parts cannot be easily separated due to the engagement of an engaging opening 29 disposed in the first guide part 25 and a hook or protrusion 31 disposed on the second guide part 27.

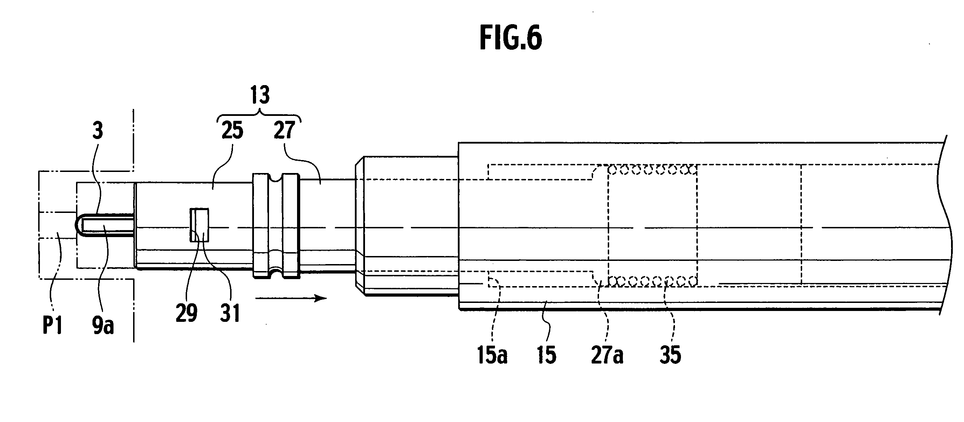

As shown in FIG. 2, the sliding member 11 is arranged inside the first guide part 25. Further, an opening (for cleaning) 33 of sufficient size to allow insertion of a ferrule is formed at the end of the first guide part 25. The sliding member 11 is supported by the first guide part 25 so as to be capable of rotating in the circumferential direction. Thus, in relation to the inner guide member 9, the sliding member 11 can slide between the projected position (FIG. 3) and the retracted position (FIG. 4) and can rotate together with the inner guide member 9. Further, the relative forward and backward directional movement of the sliding member 11 in relation to the external guide member 13 (the leftward-rightward direction in FIG. 2) is restricted by the stepped part 33a of the opening 33 at the front end and the tip edge of the second guide part 27 at the rear end. Accordingly, when the sliding member 11 is in the retracted position (FIGS. 4 and 6), the tip end 9a of the extending part 9c juts out from the opening 33 together with the cleaning tape 3.

As shown in FIG. 2, the base part of the second guide part 27 is supported by the guide frame 15 so as to be capable of sliding in the forward/backward direction (the leftward-rightward direction in FIG. 2). The base part flange 27a of the second guide part 27 is constantly kept biased to the forward direction (the leftward direction in FIG. 2) by a second biasing means 35 such as a coil spring or the like. Moreover, the base part flange 27a is in contact with an inner stepped part 15a of the guide frame 15 such that the forward directional movement of that flange is restricted.

Here, the sliding member 11 is in the projected position protruding beyond the tip end 9a of the extending part 9c. The sliding member 11 can move in the forwardbackward directions in conformance with the movement of the external guide member 13. Thus, as shown in FIG. 6, application of pressure to the external guide member 13 in opposition to the second biasing means 35 moves the external guide member 13 together with the sliding member 11 in the backward direction, such that the tip end 9a of the extending part 9c is made to protrude out from the external guide member 13 together with the cleaning tape 3.

Referring again to FIG. 1, the guide frame 15 is rotatably supported by a pivot shaft 37 disposed in the housing 5 at the base part thereof.

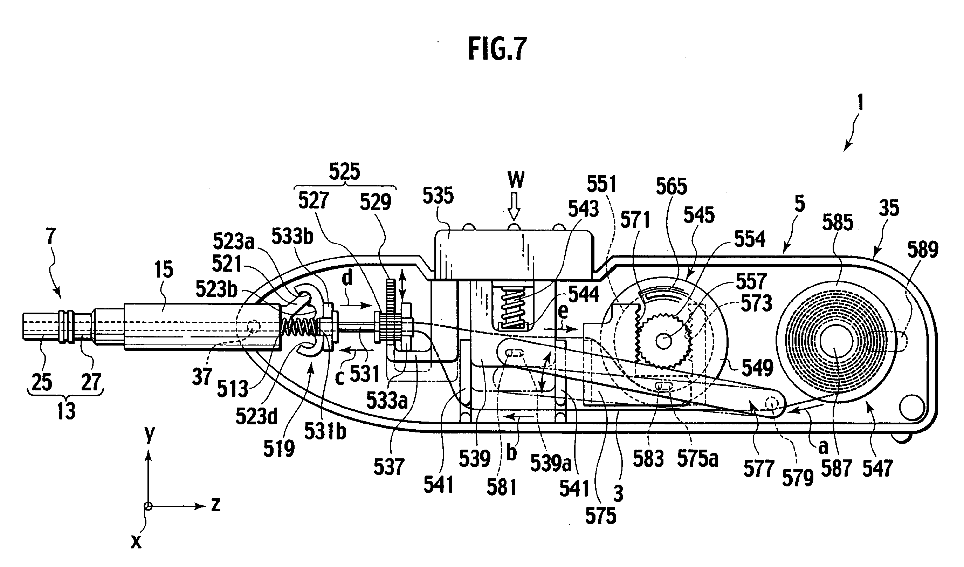

The housing 5 can be parted right and left. FIG. 7 shows the cleaner 1 with the housing 5 in the parted condition. Inside the housing 5 are provided a positioning means 519 for positioning the cleaning part 7 at a determined positional angle, a cleaning part rotating means 525 for rotating the inner guide member 9 of the cleaning part 7, a winding means 545 for winding cleaning tape 3 that has been used, a tape delivery means 547 for feeding out the cleaning tape 3 and a manual operating part 535.

The positioning means 519, cleaning part rotating means 525, winding means 545 and delivery means 547 can be provided by any suitable means. Here, one illustrative example will be described with reference to FIGS. 7 to 10.

Henceforth, the longitudinal direction of the housing 5 will be referred to as the z direction and the direction of operation of the manual operating part 535 is referred to as the y direction.

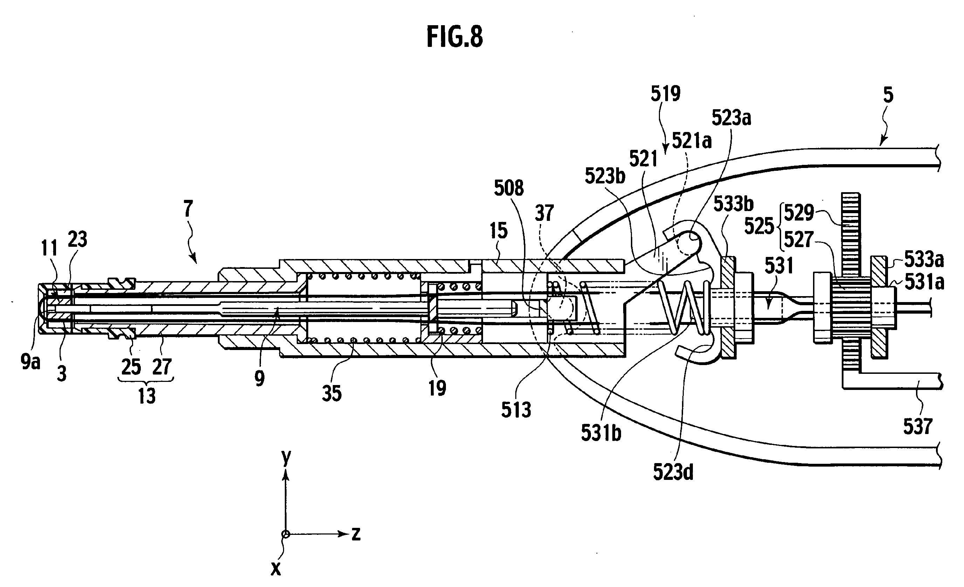

As shown in FIG. 8, the positioning means 519 provides a plurality of concave engaging parts 523a, b, c and d, and an engaging arm 521 that extends from the base part of the guide frame 15 and provides a convex engaging part 521a that engages the concave engaging parts 523a, b, c and d.

The concave engaging parts 523 a, b, c and d are arranged in a circular arc centered around the pivot shaft 37 at intervals of a predetermined angle. Thus, when the guide frame 15 is rotated, taking the pivot shaft 37 as the point of support, the convex engaging part 521a is made to engage one of the concave engaging parts 523 a, b, c or d, thereby enabling the cleaning part 7 to be positioned at a determined angle in relation to the housing 5.

When the convex engaging part 521 a is made to engage with the concave engaging part 523a, the highest in FIG. 8, the cleaning part 7 is positioned horizontally in relation to the longitudinal direction z of the housing 5. On the other hand, when the convex engaging part 521a is made to engage with the concave engaging part 523d, the lowest of those parts in FIG. 8, the cleaning part 7 is positioned at a maximum upward inclination in relation to the longitudinal direction z of the housing 5. In this way, by directing the cleaning part 7 to a predetermined upward angle, the cleaning part 7 can be made to accurately come into contact with a downward terminal, thereby enabling any soiling to be easily and properly removed from the downward terminal.

The cleaning part rotating means 525 includes a pinion 527 and a rack 529 that engage with the pinion 527. The shaft 531 of the pinion 527 is supported at both ends by shaft bearings 533a and 533b disposed in the housing 5 such that the shaft 531 can rotate around the z axis.

The rack 529 is disposed on an arm 537 extending from the manual operating part 535 and can move in a vertical trajectory (the y direction) together with the manual operating part 535.

The pinion 527 engages with the rack 529, thus the movement of the rack 529 in the y direction is converted to the rotation around the z axis of the pinion 527. That is to say, by moving the manual operating part 535 upwards or downwards the rack 529 is moved upwards or downwards thereby applying rotational force either in the clockwise or counter-clockwise rotational directions, to the pinion 527.

One end of a coil spring 513 providing a rotational force transmission means, is secured to the end 531 b on the side of the shaft 531 facing the cleaning part 7. The other end of this coil spring 513 is secured to a connecting member 508 that fits together with the base part 9b of the inner guide member 9. Thus, the coil spring 513 transmits a rotational drive force from the cleaning part rotating means 525 to the inner guide member 9. That is to say, as the pinion 527 is connected to the inner guide member 9 via the coil spring 513, even when the cleaning part 7 is positioned at an inclination in relation to the z axis, the rotational drive force can be smoothly transmitted from the pinion 527 to the inner guide member 9 enabling the inner guide member 9 to be rotated about the extending axis thereof.

Referring to FIG. 7, the manual operating part 535 is supported by a guide member 541 disposed in the housing 5 so as to be capable of movement only in a vertical trajectory (the y axis), and is subject to being biased in the upward direction by a pressure applying means 543 such as a coil spring or the like disposed between the manual operating part 535 and a supporting member 544 provided in the housing 5. Thus, the manual operating part 535 descends in response to pressure applied in the direction shown by the arrow W against the coil spring 543, while the manual operating part 535 is raised by the coil spring 543 when that pressure is released, returning to the original position.

The winding means 545 includes a winding reel 549 for winding used cleaning tape 3, which is rotatably supported by a shaft 557 (FIG. 7) disposed in the housing 5.

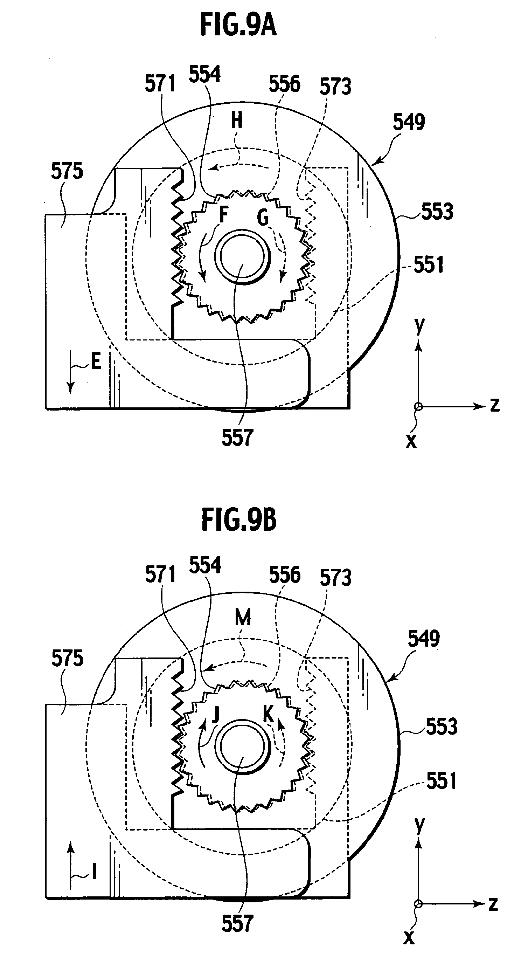

As shown in FIGS. 9, 10 and 11, the winding reel 549 provides a barrel 551 and a first rotating flange 553 and second rotating flange 555 disposed on either side of this barrel 551. This barrel 551 and the first and second rotating flanges 553 and 555 have a disk like shape extending in y-z plane, respectively. A first pinion 554 is disposed on the outer surface (the surface on the opposite side to the barrel 551) of the first rotating flange 553 while a second pinion 556 is disposed on the outer surface of the second flange 555.

Between the barrel 551 and the first rotating flange 553 a first ratchet mechanism 559 is provided, that transmits only rotational movement in the counter-clockwise direction of the first rotating flange to the barrel 551. This first ratchet mechanism 559 comprises a plurality of teeth 563 disposed on the side face of the barrel 551 facing the first flange 553, and a claw 565 disposed on the first flange 553 that can engage with the teeth 563 and can bend outward (to the opposite side to the barrel 551).

In the same manner, between the barrel 551 and the second rotating flange 555 a second ratchet mechanism 561 is provided, that transmits only rotational movement in the counter-clockwise direction in FIG. 7 of the second rotating flange to the barrel 551. This second ratchet mechanism 561 provides a plurality of teeth 567 disposed on the side face of the barrel 551 facing the second flange 555, and a claw 569 disposed on this second rotating flange 555 that can engage with the teeth 567 and can bend outward (to the opposite side to the barrel 551).

The winding means 545 comprises a movable frame 575 that rotates the winding reel 549. The movable frame 575 includes a first rack 571 that functions as a drive gear to engage with the first pinion 554 and a second rack 573 that functions as a drive gear to engage with the second pinion 556.

The movable frame 575 is supported by a guide rail (not shown) provided in the housing 503 so as to be able to slide freely in a vertical trajectory (the y direction) only.

The first rack 571 engages with teeth at the front end (the left side in FIG. 7) of the first pinion 554 while the second rack 573 engages with teeth at the rear end (the right side in FIG. 7) of the second pinion 556. More specifically, as shown in FIG. 7, the first and second racks 571 and 573 engage with the relative first and second pinions 554 and 556 in the positions rotated 180° around the shaft 557 to each other. Thus, when the movable frame 575 together with the first and second racks 571 and 573 move in a vertical trajectory (the y direction), the first and second pinions 554 and 556 rotate in mutually opposite directions.

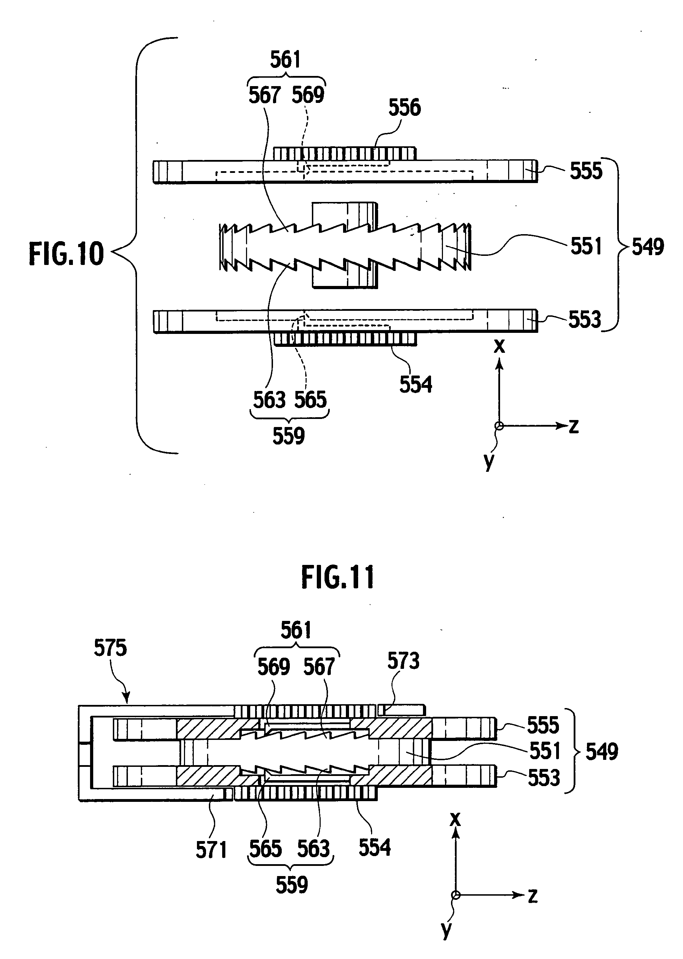

The operations of the ratchet mechanisms 559 and 561 and of the winding reel 549 will now be described with reference to FIGS. 9A, 9B and 10.

FIG. 9A illustrates the operations when the movable frame 575 moves downward (the direction of the arrow E).

The first rack 571 rotates the first rotating flange 553 in the counter-clockwise direction (indicated by the arrow F) via the first pinion 554. The second rack 573 rotates the second rotating flange 555 in the clockwise direction (indicated by the arrow G) via the second pinion 556.

Due to the action of the first and second ratchet mechanisms 559 and 561, the barrel 551 turns only with the rotating flanges 553 and 555 that rotate in the counter-clockwise direction. Accordingly, the barrel 551 turns with the first rotating flange 553 thereby rotating in the counter-clockwise direction (indicated by the arrow H). The claw 565 of the second ratchet mechanism 561 bends toward the outside, passing over the teeth 567 and the second rotating flange 555 rotates clockwise without engaging.

FIG. 9B shows the operations when the movable frame 575 moves upward (indicated by the arrow I).

The first rack 571 rotates the first rotating flange 553 in the clockwise direction (indicated by the arrow J) via the first pinion 554. The second rack 573 rotates the second rotating flange 555 in the counter-clockwise direction (indicated by the arrow K) via the second pinion 556.

Accordingly, the barrel 551 turns with the second rotating flange 555 that rotates counter-clockwise thereby rotating in a counter-clockwise direction (indicated by the arrow M). The claw 565 of the first ratchet mechanism 559 bends toward the outside, passing over the teeth 563 so that the first rotating flange 553 rotates clockwise without engaging.

Accordingly, when the movable frame 575 moves in either the upward or downward direction the barrel 551 rotates counter-clockwise in FIG. 7 thereby winding the cleaning tape 3.

The winding means 545 further comprises a crank rod 577 that moves in response to the manual operating part 535, and drives the movable frame 575 to move upward or downward.

This crank rod 577 is rotatably supported at one end by a shaft 579 provided in the housing 5. At the other end, the crank rod 577 has a pin 581 that engages a elongated opening 539a disposed in the manual operating part 535 inside the housing 5, while in substantially the mid-region of the crank rod 577 a drive pin 583 is provided that engages a elongated opening 575a disposed in the movable frame 575. These elongated openings 539a and 575a are formed having an elongated shape in the z direction and absorb movement in the z direction of the pin 581 and the drive pin 583 occurring in conjunction with rotation of the crank rod 577.

When the manual operating part 535 is pressured as indicated by the arrow W and moves downward against the resilience of the coil spring 543, the pin 581 of the crank rod 577 is pressed down and the crank rod 577 rotates downward pivoting around the shaft 579. The movable frame 575 is pressed downward by the drive pin 583 of the crank rod 577 and moves downward.

When the pressure is released and the manual operating part 535 moves upward again driven by the resilience of the coil spring 543, the pin 581 of the crank rod 577 is pushed upward and the crank rod 577 turns upward pivoting around the shaft 579. The movable frame 575 is pressed upward by the drive pin 583 of the crank rod 577 and moves upward.

In this winding means 545, if the manual operating part 535 is pressured the movable frame 575 moves downward and the barrel 551 of the winding reel 549 rotates counter-clockwise in FIG. 7 together with the first rotating flange 553. If the pressure applied to the manual operating part 535 is released the movable frame 575 moves upward and the barrel 551 of the winding reel 549 rotates counter-clockwise in FIG. 7 together with the second rotating flange 555.

Accordingly, the cleaning tape 3 is wound by determined increments by the winding reel 549 when pressure is either applied to or released from the manual operating part 535.

The delivery means 547 includes a reel 585 on which the unused portion of the cleaning tape 3 is wound. This reel 585 is rotatably supported by a shaft 587 provided in the housing 5.

The reel 585 is subject to a suitable degree of resistance when rotating due to the effect of a protrusion (not shown) disposed on the peripheral surface of the shaft 587 or a spring (not shown) supported by the shaft 587 and disposed between the reel 585 and the housing 5. Thus, the cleaning tape 3 is prevented from being delivered from the reel 585 more than required and from sagging at the tip end 9a of the cleaning part 7.

Since the cleaning tape 3 is wound by the winding reel 549, moving from the reel 585 in conformance with the arrows a, b, c, d and e in FIG. 7, an unused portion of the tape is consistently supplied to the tip end 9a of the cleaning part 7.

The amount of cleaning tape 3 that has been used and the amount remaining can be checked from the outside via a window 589 formed in the housing 5.

With the cleaner 1 configured in this way, used cleaning tape 3 is wound by the winding means 545 by depressing the manual operating part 535 when the ferrule end face P1 is inserted in the opening 33, while cleaning tape is delivered from the delivery means 547. Thus, soiling on the end face P1 is removed by consistently renewed cleaning tape 3.

A removable cover 591 as shown in FIG. 1 can be installed over the cleaning part 7. This cover 591 is preferably joined to the housing 5 by a band 592 so that it does not get lost when removed.

The cover 591 comprises a tube shaped part 595 and a removable cap 597 attached to the end of the tube shaped part 595. The tube shaped part 595 has an insertion hole (not shown) provided in the end thereof and by removing the cap 597 cleaning can be performed with the cover 591 mounted on the cleaning part 7.

When cleaning the ferrule end face of a female connector installed in an adapter the external guide member 13 comes into contact with the adapter, thereby moving relatively backwards (the right side in FIG. 2) while in conjunction with this, the sliding member 11 moves to the retracted position (FIG. 4). At this time, the cleaning tape 3 may become detached from the tip end 9a of the inner guide member 9 for some reason. As shown in FIG. 5, the detached cleaning tape 3 passes beside the extending part 9c of the inner guide member 9 extending around the sliding member 11. In this condition, if the external guide member 13 is manually moved forward (toward the left in FIG. 2), the sliding member 11 moves to the projected position (FIG. 3), the tip end 9a of the inner guide member 9 retreats into the sliding member 11 and the cleaning tape 3 is allowed to pass over the center of the front face 11b of the sliding member 11. That is to say, there is a return to the standby condition prior to commencement of the cleaning operation.

In this condition, if the cleaning part 7 is inserted in the female connector, the external guide member 13 once again comes into contact with the adapter and moves backward and the sliding member 11 moves to the retracted position (FIG. 4). Accordingly, even if the cleaning tape 3 detaches from the tip end 9a of the inner guide member 9, the original condition can be reverted to by performing the above described operation thereby enabling the cleaning operation to be performed swiftly.

Further, by applying pressure in the direction W to the manual operating part 535 during a cleaning operation, the inner guide member 9 rotates left and right about the extending axis thereof and the combination of this rotation action with the forward movement action of the cleaning tape 3 enables the ferrule end face P 1 to be quickly and efficiently cleaned.

This embodiment was described using a cleaning tape 3 as the cleaning material for the cleaner, however it is also suitable to use a filament type cleaning material.

In short, this embodiment of a cleaner for an optical fiber connector according to the present invention furnishes the following features:
First, this optical fiber connector cleaner comprises:
   an elongated inner guide member (9) having a base and an end tip, around which a cleaning member (3) extending in conformance with the axis of extension thereof, from the base to the end tip and returning again to the base;
   a sliding member (11) supported so as to be capable of sliding along the inner guide member and having a pair of guide parts (23, 24) that guide the cleaning member, which can slide between a projected position protruding beyond the end tip of the inner guide member and a retracted position retreating beyond the end tip, such that when the sliding member is in the projected position, the cleaning member is positioned extending around the sliding member instead of around the end tip of the inner guide member; and
   a tubular shaped external guide member that supports the sliding member and encloses the inner guide member and the cleaning member.
Second, the sliding member can slide, together with the external guide member, relative to the inner guide member, along the axis of extension of the inner guide member.
Third, the sliding member can rotate, together with the inner guide member, relative to the external guide member, around the axis of extension of the inner guide member.
Fourth, the external guide member is constantly biased by a biasing means such that the sliding member is in the projected position.
Fifth, the cleaning member is capable of moving, along the axis of extension of the inner guide member, from the base of the inner guide member around the end tip back to the base.
Sixth, the guide parts are guide grooves having a U cross-sectional shape.
Seventh, the guide grooves operate in conjunction with the inner surface of the external guide member to restrict the movement of the cleaning member in the perpendicular direction to the axis of extension of the inner guide member.
Eighth, the cleaner for an optical fiber connector comprises
   an inner guide member having an end tip that is a cleaning region;
   a cleaning member that extends around the end tip of the inner guide member;
   a sliding member slidably supported so as to move from a projected position protruding from the end tip of the inner guide member to a retracted position retreating from the end tip, such that when the sliding member is in the projected position, the cleaning member extends around the sliding member instead of around the end tip of the inner guide member; and
   an external guide member that supports the sliding member such that the sliding member is slidable between the projected position and the retracted position and which is constantly biased by a biasing means such that the sliding member is disposed in the projected position,
   wherein the sliding member provides a guide slot having a U cross-sectional shape, the guide slot restricts the movement in the leftward and rightward directions of the cleaning member engaged in the guide slot.
Ninth, the sliding member is formed as a separate body to the external guide member and is supported so as to rotate freely together with the inner guide member.

According to the above described optical fiber connector cleaner, the sliding member having a guide groove from which the cleaning member does not become detached, can slide between the projected position protruding from the tip end of the inner guide member and the retracted position retreating beyond that tip end. Even if for example, during cleaning the cleaning member or cleaning tape detaches from the tip end of the inner guide member, because the cleaning member is restricted inside the guide groove, if the sliding member is moved to the projected position, the detached cleaning member can be reengaged to extend around the center part of the front face of the sliding member. Thereafter, if the sliding member is moved to the retracted position, the tip end of the inner guide member is made to project to the front from the sliding member while pushing the cleaning member from the inside. Accordingly, the cleaning member can be swiftly engaged to extend around the inner guide member without the use of a tool. Further, when cleaning is not being performed, the cleaning tape can be protected from soiling from the outside by an external guide member covering the cleaning tape.

In the present invention the sliding member is formed as a separate body to the external guide member and is supported so as to rotate freely together with the inner guide member, thus the end face of a ferrule can be swiftly and properly cleaned by a rotational movement.

Although the present invention has been fully described in connection with the preferred embodiment thereof with reference to the accompanying drawings, it is apparent to those skilled in the art that changes and modifications are to be understood as included within the scope of the present invention as defined by the appended claims unless they depart therefrom.

## Claims

1. A cleaner for an optical fiber connector comprising:
an elongated inner guide member (9) having a base and an end tip, around which a cleaning member (3) extends in conformance with the axis of extension thereof, from the base to the end tip and returning again to the base;
a sliding member (11) supported so as to be capable of sliding along the inner guide member and having a pair of guide parts (23, 24) that guide the cleaning member, which can slide between a projected position protruding beyond the end tip of the inner guide member and a retracted position retreating beyond the end tip, such that when the sliding member is in the projected position, the cleaning member is positioned extending around the sliding member instead of around the end tip of the inner guide member; and
a tubular shaped external guide member that supports the sliding member and encloses the inner guide member and the cleaning member.

2. The cleaner for an optical fiber connector according to claim 1, wherein the sliding member can slide, together with the external guide member, relative to the inner guide member, along the axis of extension of the inner guide member.

3. The cleaner for an optical fiber connector according to claim 1, wherein the sliding member can rotate, together with the inner guide member, relative to the external guide member, around the axis of extension of the inner guide member.

4. The cleaner for an optical fiber connector according to claim 1, wherein the external guide member is constantly biased by a biasing means such that the sliding member is in a projected position.

5. The cleaner for an optical fiber connector according to claim 1, wherein the cleaning member is capable of moving, along the axis of extension of the inner guide member, from the base of the inner guide member around the end tip back to the base.

6. The cleaner for an optical fiber connector according to claim 1, wherein the guide parts are guide grooves having a U cross-sectional shape.

7. The cleaner for an optical fiber connector according to claim 6, wherein the guide grooves operate in conjunction with the inner surface of the external guide member to restrict the movement of the cleaning member in the perpendicular direction to the axis of extension of the inner guide member.

8. A cleaner for an optical fiber connector comprising:
an inner guide member having an end tip that is a cleaning region;
a cleaning member that extends around the end tip of the inner guide member;
a sliding member slidably supported so as to move from a projected position protruding from the end tip of the inner guide member to a retracted position retreating from the end tip, such that when the sliding member is in the projected position, the cleaning member extends around the sliding member instead of around the end tip of the inner guide member; and
an external guide member that supports the sliding member such that the sliding member is slidable between the projected position and the retracted position and which is constantly biased by a biasing means such that the sliding member is disposed in the projected position,
wherein the sliding member provides a guide slot having a U cross-sectional shape, the guide slot restricts the movement in the leftward and rightward directions of the cleaning member engaged on the guide slot.

9. The cleaner for an optical fiber connector according to claim 8, wherein the sliding member is formed as a separate body to the external guide member and is supported so as to rotate freely together with the inner guide member.
